# EUROPÄISCHE PATENTANMELDUNG

(11) **EP 0 743 004 A1**
(43) Veröffentlichungstag der Anmeldung: **20.11.1996**
(21) Anmeldenummer: 96107925.8
(22) Anmeldetag: 17.05.1996
(51) Int. Cl.: A22B 3/00, A22B 3/06, A22B 1/00

(54) **Vorrichtung zum Betäuben von Schlachttieren**

(30) Priorität: 18.05.1995 DE 19518336
(71) Anmelder: Banss Maschinenfabrik GmbH & Co. KG, D-35216 Biedenkopf (DE)
(72) Erfinder: Briese, Andreas, 21493 Grove (DE); Freund, Uwe, 35075 Gladenbach (DE); Von Holleben, Karen Dr., 21493 Grove (DE); Mickwitz, Gerhard Prof. Dr., 21337 Lüneburg (DE); Runzheimer, Bernd, 35075 Gladenbach-Runzhausen (DE); Schmidt, Frank, 35232 Dautphetal-Dautphe (DE); Schreiber, Helmut, 63741 Aschaffenburg (DE); Weide, Harald, 35216 Biedenkopf-Engelbach (DE); Weigel, Wilfried, 35232 Dautphetal-Friedensdorf (DE); Von Wenzlawowicz, Martin, Dr., 21493 Grove (DE)
(74) Vertreter: Klunker . Schmitt-Nilson . Hirsch

(57) **Zusammenfassung**

Vorrichtung zum elektrischen Betäuben von Schlachttieren, insbesondere Schweinen, aufweisend
(a) eine Betäubungsfalle (4), in der jeweils ein immobilisiertes Schlachttier elektrisch betäubt werden kann;
(b) und einen Zugangsweg (6) für die Schlachttiere zu der Betäubungsfalle (4), der einen Boden aufweist,
**gekennzeichnet durch**
(c) einen Transportwagen (8), der auf niedriger als der Boden des Zugangswegs liegendem Niveau abgestützt ist und längs des Zugangswegs und bis in die Betäubungsfalle hin und her bewegbar ist;
(d) einen Längsschlitz im Boden des Zugangswegs;
(e) und ein Tragelement (20) als Bestandteil des Transportwagens (8), das - den Längsschlitz passierend - relativ zu dem restlichen Transportwagen (8) oder mitsamt dem Transportwagen (8) so weit anhebbar ist, daß es an der Bauchseite eines Schlachttiers angreifend das Schlachttier von dem Boden weg abhebt, und so weit absenkbar ist, daß ein Hineinlaufen von Schlachttieren in den Zugangsweg möglich ist.

## Beschreibung

Gegenstand der Erfindung ist eine Vorrichtung zum Betäuben von Schlachttieren, insbesondere Schweinen, aufweisend
(a) eine Betäubungsfalle, in der jeweils ein immobilisiertes Schlachttier betäubt werden kann:
(b) und einen Zugangsweg für die Schlachttiere zu der Betäubungsfalle der einen Boden aufweist,
gekennzeichnet durch
(c) einen Transportwagen, der auf niedriger als der Boden des Zugangswegs liegendem Niveau abgestützt ist und längs des Zugangswegs und bis in die Betäubungsfalle hin und her bewegbar ist;
(d) einen Längsschlitz im Boden des Zugangswegs;
(e) und ein Tragelement als Bestandteil des Transportwagens, das - den Längsschlitz passierend - relativ zu dem restlichen Transportwagen oder mitsamt dem Transportwagen so weit anhebbar ist, daß es an der Bauchseite eines Schlachttiers angreifend das Schlachttier von dem Boden weg abhebt, und so weit absenkbar ist, daß ein Hineinlaufen von Schlachttieren in den Zugangsweg möglich ist.

Die erfindungsgemäße Vorrichtung ist vorzugsweise für das elektrische Betäuben von Schlachttieren ausgebildet. Man kann jedoch die Vorrichtung auch für andere Betäubungsarten vorsehen, wobei konkret das Betäuben mittels eines Gases, das keinen oder nicht genügend Sauerstoff enthält, das Betäuben mittels Vakuum, das Betäuben durch Eindringen eines Flüssigkeitsstrahls in das Gehirn des Schlachttiers, das Betäuben durch Deponieren eines Volumens eines gasförmigen Mediums im Gehirn des Schlachttiers genannt werden. Es wird ferner drauf hingewiesen, daß die Erfindung auch die Situationen umfassen soll, bei denen das betreffende Schlachttier in der Falle getötet, statt nur betäubt wird. Die Grenze, bis zu der ein Schlachttier nur betäubt ist und ab der das Schlachttier den Exitus erreicht hat, ist fließend, und es gibt durchaus Schlachthofkonzeptionen und Schlachtabläufe, bei denen alle Schlachttiere oder ein Teil der Schlachttiere in der Falle faktisch getötet werden. Dennoch werden in der Anmeldung die Ausdrucksweisen "zum Betäuben von Schlachttieren" und "Betäubungsfalle" verwendet, weil bei den meisten in Frage kommenden Schlachtabläufen das betreffende Schlachttier eine Betäubungsphase durchläuft, selbst wenn es in der Falle den Exitus erleidet.

Es ist recht weit verbreitete Praxis. Schlachttiere in einer Falle zu betäuben oder zu töten. Auf den funktionellen Kern konzentriert ist eine Falle im Prinzip ein im wesentlichen kastenartiges, normalerweise oben offenes Gebilde, das groß genug ist, um ein Schlachttier (manchmal auch um mehrere Schlachttiere) darin unterzubringen. An einer Zugangsseite kann die Falle geöffnet werden, um das nächste zu betäubende Schlachttier in die Falle einzulassen. Ferner weist die Falle eine öffenbare Wand, meist eine Seitenwand, auf, um das betäubte Schlachttier aus der Falle herausbringen zu können.

Man kennt ferner bereits Fallen. die es erlauben, Schlachttiere zu immobilisieren, d.h. weitgehend unbeweglich zu halten. Als ein Beispiel wird auf die Schrift (Banss-Anmeldung) hingewiesen, wo eine insgesamt anhebbare Betäubungsfalle mit zwei sich V-förmig verjüngenden Seitenwänden beschrieben ist; durch das Anheben der Falle wird das betreffende Schlachttier von den Seiten her eingeklemmt und verliert dadurch seine Bewegungsfreiheit nahezu vollständig. - In einer Betäubungsfalle immobilisierte Schlachttiere lassen sich rationeller und sicherer betäuben, sei es z.B. durch manuelles Ansetzen von Stromelektroden, sei es durch Heranfahren von z.B. Stromelektroden mit Fremdkrat. Daß das Einwirkungsziel, z.B. der Schlachttierkopf, keine großen Bewegungen ausführen kann, erleichtert die Durchführung der Betäubung erheblich.

Bisher ist es üblich, die Schlachttiere durch einen Treibgang der Falle zuzuleiten. Jeweils das nächste zu betäubende Schlachttier in die Falle hineinzubringen, ist ein zuweilen mühevolles und psychisch belastendes Unterfangen. Ein zu betäubendes Schlachttier bewegt sich normalerweise nur sehr unwillig in die Falle, weil es eine drohende Gefahr spürt.

Der Erfindung liegt die Aufgabe zugrunde, eine Vorrichtung zum Betäuben von Schlachttieren, die eine Betäubungsfalle aufweist, so auszubilden, daß das Einbringen der einzelnen Schlachttiere bequemer und für das Schlachttier weniger belastend bewerkstelligt werden kann.

Mittels der Erfindung läßt sich ein Schlachttier, das sich im Zugangsweg befindet, mit Hilfe des Tragelements so weit anheben, daß seine Füße den Bodenkontakt verlieren, so daß das betreffende Schlachttier deutlich immobilisiert bäuchlings auf dem Tragelement liegt; hierbei handelt es sich um eine streßfreie Ruhiglage. In diesem hilflosen Zustand wird das betreffende Schlachttier durch Bewegung des Transportwagens in die Betäubungsfalle hinein verbracht, wo es rationell und sicher betäubt werden kann. Dann kann der Transportwagen zurück zu dem Zugangsweg fahren, und ein neuer Einbringzyklus beginnt. Das Einbringen des betreffenden Schlachttiers in die Betäubungsfalle mit Hilfe des verfahrbaren Tragelements statt des aktiven Hineinlaufens ist für das Schlachttier optimal streßarm. Das in der geschilderten Art immobilisierte Schlachttier kann ohne das Risiko von stromflußbedingten Schäden, wie Wirbelsäulenbruch, betäubt werden.

Das Tragelement ist vorzugsweise mindestens in seinem oberen Bereich ein sich in Längsrichtung des Zugangswegs erstreckendes Element, so daß es beim Anheben mit der Bauchseite des betreffenden Schlachttiers im wesentlichen auf die gesamte Bauchseitenlänge und jeweils zwischen dem linken Vorderfuß und dem rechten Vorderfuß und zwischen dem linken Hinterfuß und dem rechten Hinterfuß in Kontakt kommt. Vorzugsweise weist der Zugangsweg Seitenwände auf, die einen derartigen Abstand voneinander und eine derartige Höhe über den Boden des Zugangswegs haben, daß das betreffende Schlachttier, das bäuchlings auf dem Tragelement liegt, an einem seitlichen Herabfallen von dem Tragelement gehindert ist. Der gleiche Gesichtspunkt gilt auch für die Betäubungsfalle, wo eher noch ein engerer Abstand der Seitenwände günstig ist, um den Immobilisierungseffekt zu steigern. Um das betreffende betäubte Schlachttier besonders einfach aus der Betäubungsfalle ausbringen zu können, ist vorzugsweise eine Seitenwand der Betäubungsfalle öffenbar ausgebildet. Wenn man diese Seitenwand z.B. nach oben schwenkend oder nach unten schwenkend öffnet und das Tragelement genügend weit absenkt, kann das betäubte Schlachttier zur Seite hin abrollen oder umfallen. Z.B. in diesem seitlich liegenden Zustand kann der nächste Schlachtschritt erfolgen, normalerweise das Abstechen und anschließende Entbluten, z.B. auf einem horizontalen Entblute-Plattenband. Vorzugsweise ist die Falle von dem Zugangsweg durch eine Art Tür, insbesondere in Vertikalrichtung verschiebbare Schiebetür, von dem Zugangsweg getrennt. Beim beschriebenen Einbringen eines Schlachttiers mit Hilfe des das Tragelement aufweisenden Transportwagens wird die Tür geöffnet und hinter dem eingebrachten Tier geschlossen.

Man kann die erfindungsgemäße Vorrichtung für ein manuelles Bewegen des Transportwagens in Längsrichtung und für ein manuelles Anheben und Absenken des Tragelements vorsehen. Sehr viel günstiger und daher bevorzugt ist es jedoch, für die Längsbewegungen des Transportwagens und/oder für das Anheben des Tragelements fremdkraftbetätigte Antriebe vorzusehen. Hierfür gibt es eine Vielzahl technischer Ausführungsmöglichkeiten. Für den Antrieb des Transportwagens in Längsrichtung seien konkret eine Zylinder-Kolben-Einheit, ein Gewindespindelantrieb, ein Antrieb mittels einer Zugkette oder eines Zugseils, und ein am Transportwagen sitzender Antriebsmotor, der z.B. über ein Kettenrad in eine stationäre, längs des Zugangswegs gespannte Kette greift, genannt. Für den Antrieb für das Anheben des Tragelements seien konkret eine Zylinder-Kolben-Einheit, ein Anheben mit einem Mechanismus nach dem Exzenterprinzip, und die vorstehend für die Längsbewegungen des Transportwagens genannten Antriebe genannt.

Die Bewegbarkeit des Transportwagens in Längsrichtung des Zugangswegs kann insbesondere rollend oder gleitend vorgesehen sein.

Vorzugsweise ist dem Längsschlitz eine Abdeckung zugeordnet, die durch das Anheben des Tragelements geöffnet wird. Auf diese Weise wird eine etwaige Verschmutzung des Raums unter dem Boden, in dem sich ja der Transportwagen bewegt, durch den Längsschlitz hindurch verringert. Außerdem ist eine derartige Abdeckung bei gewissen Ausführungsformen der Erfindung günstig, um zu verhindern, daß die Schlachttiere in den Längsschlitz hineintreten oder auf die Oberseite des Tragelements treten, wenn sie in den Zugangsweg hineingehen.

Es versteht sich, daß das Tragelement mindestens in seinem angehobenen Zustand, wenn es ein Schlachttier trägt, in seitlicher Richtung derart abgestützt sein muß, daß es den auftretenden Belastungen standhält. Diese seitliche Abstützung kann man insbesondere über den Transportwagen bewerkstelligen, was eine entsprechend breitspurige Ausbildung des Transportwagens und entsprechend tragfähige Anordnung des Tragelements auf dem Transportwagen erfordert. Als konstruktiv weniger aufwendig wird allerdings bevorzugt, daß sich das Tragelement, mindestens im angehobenen Zustand, an den seitlichen Begrenzungen des Längsschlitzes relativbewegbar abstützt. Auf diese Weise werden die seitlichen Kräfte, die auf das Tragelement wirken, ziemlich dicht am Krafteinwirkungsbereich abgetragen und nur zu einem geringen Teil zur Basis des Transportwagens weitergeleitet.

Besonders einfache und daher günstige Tragelementkonfigurationen sind so, daß das Tragelement in seinem oberen Bereich im wesentlichen vertikal-plattenartig oder längsbalkenartig ausgebildet ist. Es versteht sich, daß das Tragelement an seiner Oberseite ohne Kanten bzw. abgerundet ausgebildet ist, um den Schlachttieren nicht unnötig Schmerz zuzufügen.

Vorzugsweise ist das Tragelement in seinem oberen Bereich mit einer oder zwei Elektroden versehen, um Strom für eine Herzbetäubung durch das betreffende Schlachttier zu leiten. Diese Maßnahme stellt eine besonders bedeutsame Weiterbildung der Erfindung dar, weil hiermit das an sich zum Anheben des betreffenden Schlachttiers vorgesehene Tragelement eine wichtige zusätzliche Funktion erhält. Da das zu betäubende Tier bereits bäuchlings auf dem Tragelement aufliegt und durch sein erhebliches Eigengewicht gegen das Tragelement gepreßt wird, können die genannten Elektroden z.B. in der Oberseite des Tragelements eingebaut sein. Die Elektroden werden so an dem Tragelement plaziert, daß ein zwischen den zwei Elektroden durch den Schlachttierkörper fließender Strom durch die Herzgegend des Schlachttiers geht. Dieser Strom fließt lediglich durch einen relativ kleinen Bereich des Schlachttierkörpers in der Herzgegend, und auf diese Weise können stromflußbedingte Schlachtschäden auch höchstens in einem räumlich eng begrenzten Bezirk auftreten. Wenn man nur eine Elektrode vorsieht, vorzugsweise in demjenigen Bereich, wo in etwa das Herz des betreffenden Schlachttiers zu liegen kommt, muß man eine weitere Elektrode an einer anderen Stelle des Schlachttiers vorsehen, z.B. im Kopfbereich des Schlachttiers; auch hiermit ist ein Stromfluß für eine Herzbetäubung möglich.

Vorzugsweise ist ein Elektrodenpaar zum Ansetzen im Kopfbereich des betreffenden Schlachttiers vorgesehen, um mindestens Strom für eine Hirnbetäubung durch das betreffende Schlachttier zu leiten. Normalerweise werden die Elektroden dieses Elektrodenpaars kurz hinter den Ohrmuscheln des betreffenden Schlachttiers angesetzt. Ein dann eingeschalteter Betäubungsstrom fließt zwischen den beiden Elektroden durch das Gehirn des Schlachttiers. Im vorstehenden Absatz ist angesprochen worden, daß und wie man ein oder zwei Kopfelektroden mit einer oder zwei Herzelektroden auch kombiniert einsetzen kann. Es wird darauf hingewiesen, daß die erfindungsgemäße Betäubungsvorrichtung so ausgelegt sein kann, daß zunächst mit höherem Strom eine Hirnbetäubung und danach mit niedrigerem Strom eine Herzbetäubung durchgeführt werden.

Die Herzelektrode(n) und/oder die Kopfelektrode(n) können entweder so vorgesehen sein, daß sie manuell an das betreffende Schlachttier angesetzt werden, oder können so vorgesehen sein, daß sie teilweiseselbsttätig oder vollständig-selbsttätig, möglicherweise auch mit Fremdkraftantrieb, in Anlage an dem betreffenden Schlachttier gelangen. Ein Beispiel für selbsttätig in Anlage kommende Herzelektroden ist weiter vorne gegeben worden (inkorporierte Elektroden in dem Tragelement). Man kann aber auch von seitlich unten-außen her ein oder zwei Herzelektroden manuell oder mit Fremdkraftantrieb ansetzen. Die Kopfelektroden können manuell von oben her angesetzt werden, wobei man am besten das Eigengewicht über einen sogenannten Federzug ausgleicht, an dem das Elektrodenpaar hängt, so daß die Bedienungsperson nicht das Eigengewicht des Elektrodenpaars halten muß. Alternativ kann man das Kopf-Elektrodenpaar durch Fremdkraftantrieb von oben her an den Kopf des betreffenden Schlachttiers heranfahren und dort ansetzen.

Vorzugsweise weist die Vorrichtung eine Steuerung für den teilweiseselbttätigen oder den vollständig-selbsttätigen Ablauf der folgenden Vorgänge auf:
- Positionieren des Transportwagens unter einem Schlachttier;
- Anheben des Tragelements;
- und Vorfahren des Transportwagens in die Betäubungsfalle.

"Teilweise-selbsttätig" bedeutet, daß man z. B. das Positionieren des Transportwagens unter einem Schlachttier manuell steuert und/oder daß man jeweils den Startbefehl für einzelne oder alle der genannten Vorgänge gibt, aber der weitere Ablauf des betreffenden Vorgangs selbsttätig ist. Wenn sich der Transportwagen selbsttätig unter einem Schlachttier positionieren soll, sind geeignete Sensoren, z. B. Lichtschranken, erforderlich, um die Steuerung darüber zu informieren, wo in dem Zugangsweg sich das als nächstes zu betäubende Schlachttier befindet.

Vorzugsweise weist die Vorrichtung eine Steuerung für den teilweiseselbsttätigen oder den vollständig-selbsttätigen Ablauf der Betäubungsvorgänge, nachdem das betreffende Schlachttier in der Betäubungsfalle positioniert ist, auf, vorzugsweise für eine Abfolge von Hirnbetäubung zuerst und Herzbetäubung danach. Diese Steuerung kann z. B, so ausgebildet sein, daß sie die Strompfade von und zu den einzelnen Elektroden öffnet und schließt und die Betäubungsströme in ihrem zeitlichen Ablauf oder ihrer zeitlichen Abfolge steuert. Die Steuerung kann aber auch so ausgebildet sein, daß sie das fremdkraftbetätigte Ansetzen irgendwelcher Elektroden steuert.

Schließlich kann die Steuerung so ausgebildet sein, daß die eigentlichen Betäubungsvorgänge selbsttätig in Gang gesetzt werden, sobald der Transportwagen seine Position in der Betäubungsfalle erreicht hat.

Die Erfindung und Ausgestaltungen der Erfindung werden nachfolgend anhand schematisiert zeichnerisch dargestellten Ausführungsbeispielen noch näher erläutert. Es zeigt:
- Fig. 1: eine Betäubungsvorrichtung im mittigen Längsschnitt;
- Fig. 2: einen Querschnitt der Vorrichtung von Fig. 1 längs II-II in Fig. 1, in etwas größerem Maßstab;
- Fig. 3: einen Querschnitt der Vorrichtung von Fig. 1 längs III-III in Fig. 1, in etwas größerem Maßstab;
- Fig. 4: in einem Querschnitt wie Fig. 2 eine abgewandelte Ausführungsform ausschnittsweise;
- Fig. 5: in einem Querschnitt wie Fig. 2 eine vergrößerte, ausschnittsweise Darstellung zum Zeigen von Elektroden;
- Fig. 6: eine Draufsicht von oben auf den oberen Bereich eines Tragelements, in vergrößertem Maßstab, zum Zeigen von Elektroden.

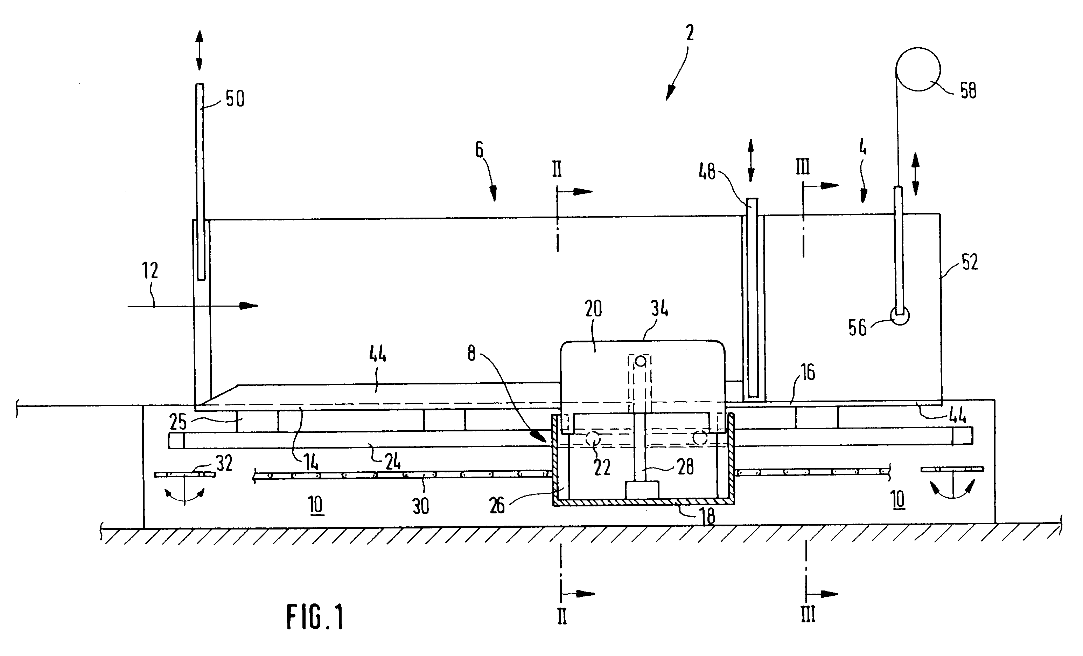

In Fig. 1 ist eine Betäubungsvorrichtung 2 dargestellt, die als die wesentlichsten Bestandteile eine Betäubungsfalle 4 rechts in Fig. 1, einen zu der Falle 4 führenden Zugangsweg 6 links in Fig. 1, und einen Transportwagen 8 aufweist, der sich in einem Raum 10 unterhalb des Zugangswegs 6 und der Falle 4 in Längsrichtung der Vorrichtung 2 hin und her bewegen läßt. Die Richtung, in der nicht eingezeichnete Schlachttiere in den Zugangsweg 6 hineinlaufen, ist mit dem Pfeil 12, d. h. von links nach rechts in Fig. 1, gekennzeichnet. Links dem Zugangsweg 6 vorgelagert befindet sich ein Bereich, z. B. ein Treibgang, aus dem zu betäubende Schlachttiere in den Zugangsweg 6 eingelassen werden.

Der Zugangsweg 6 hat einen Boden 14, der in einen Boden 16 der Falle 4 übergeht.

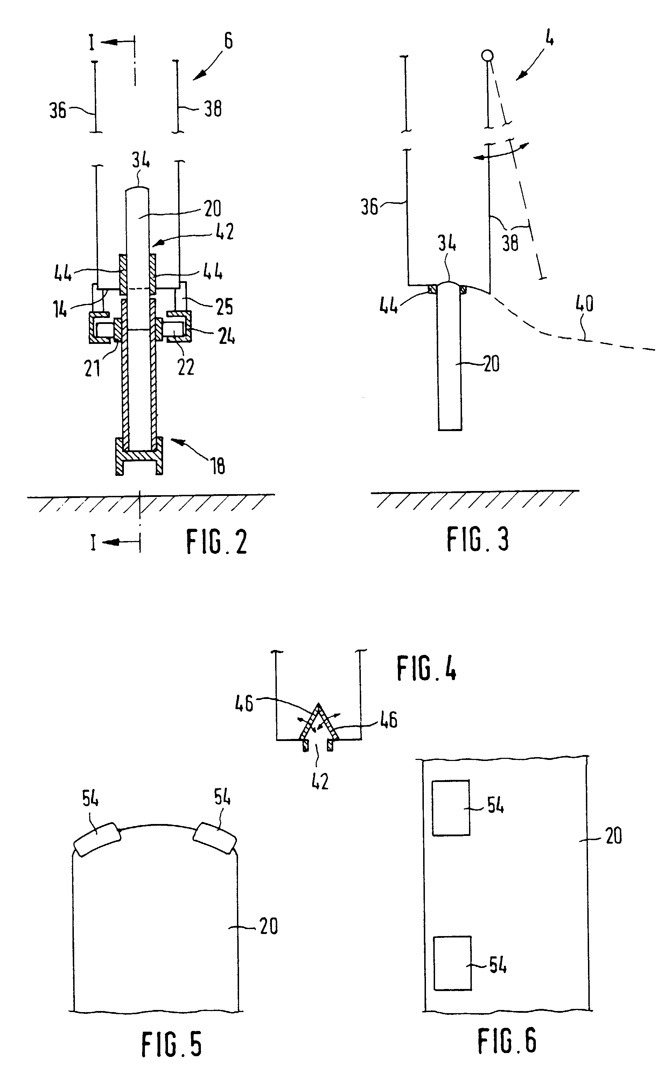

Wie man in Figuren 1 und 2 am besten sieht, besteht der Transportwagen 8 im wesentlichen aus einem - in Seitenansicht - U-förmigen, zu den Seiten hin weitgehend offenen Rahmen 18 und einem im wesentlichen vertikal-plattenartigen Tragelement 20. An seiner linken Außenseite und an seiner rechten Außenseite weist der Rahmen 18 jeweils einen sich in Längsrichtung horizontal erstreckenden Träger 21 auf, wobei an jedem der Träger 21 über dessen Länge verteilt mehrere drehbare Rollen 22 befestigt sind. Die Rollen 22 laufen in waagerechten Schienen 24, die einen U-förmigen, seitlich zum Transportwagen 8 hin offenen Querschnitt haben. Die Schienen 24 sind über vertikale Halter 25 an dem Boden 14 befestigt. Die Schienen 24 erstrecken sich über die gesamte Länge des Zugangswegs 6 und der Falle 4.

Der beschriebene Rahmen 18 des Transportwagens 8 weist vorn und hinten je eine aufrechte Säule 26 mit U-förmigem Horizontalquerschnitt zum Abstützen und Führen des Tragelements 20 auf. Mittels einer hydraulischen oder pneumatischen Zylinder-Kolben-Einheit 28, die teils in einem Kanal im Inneren des Tragelements untergebracht ist, kann das Tragelement relativ zu dem Rahmen 18 angehoben und gesteuert abgesenkt werden. Mittels einer schematisiert eingezeichneten, endlosen Zugkette 30, angetrieben von einem nicht eingezeichneten Motor über ein Kettenrad 32, kann der Transportwagen 8 in Längsrichtung der Vorrichtung verfahren werden. Alternativ kann man das Tragelement 20 aus zwei parallelen, vertikalen Platten mit einem oberen überbrückenden Abschluß aufbauen; auf diese Weise erhält man ein innen hohles Gebilde, wobei der Hohlraum z.B. zur Unterbringung von einer oder mehreren Zylinder-Kolben-Einheiten zum Anheben und Absenken genutzt werden kann.

In Fig. 2 ist der Transportwagen 8 mit vollständig angehobenem Tragelement 20 gezeichnet. In dieser Situation befindet sich die Oberseite 34 des Tragelements 20 auf einem derartigen Niveau oberhalb des Bodens 14, daß ein nicht eingezeichnetes, auf der Oberseite 34 bäuchlings liegendes Schlachttier mit seinem rechten Vorderfuß und seinem rechten Hinterfuß rechts an dem Tragelement 20 herabhängt und mit seinem linken Vorderfuß und seinem linken Hinterfuß links an dem Tragelement 20 herabhängt. wobei jedoch alle Füße vom Boden 14 weg abgehoben sind.

In Fig. 3 ist das Tragelement in seiner vollständig abgesenkten Position gezeigt. Hier fluchtet die Oberseite 34 des Tragelements 20 im wesentlichen mit dem Boden 16 in der Falle 4.

Aus den Figuren 2 und 3 ist ferner ersichtlich, daß sowohl der Zugangsweg 6 als auch die Falle 4 jeweils links und rechts eine Seitenwand 36 bzw. 38 haben. Die Seitenwände 36, 38 haben einen derartigen Abstand voneinander, daß bei angehobenem Tragelement 20 bäuchlings darauf liegende Schlachttiere durch die Seitenwände 36, 38 am seitlichen Hinunterrutschen gehindert sind. Z. B. bei Schweinen beträgt ein vernünftiger Abstand zwischen den Seitenwänden 36, 38 etwa 40 cm. Die Falle 4 ist in Längsrichtung 12 so lang, daß auch ein groß gewachsenes Schlachttier dann Platz findet. Der Zugangsweg 6 ist z. B. so lang, daß drei in Reihe stehende Schlachttiere darin Platz finden.

In Fig. 3 ist angedeutet, daß die dort rechte Seitenwand 38 z. B. mittels einer Zylinder-Kolben-Einheit um eine obere, in Längsnchtung der Vorrichtung 2 verlaufende Achse nach außen schwenkbar ist. Der Boden 16 ist im gezeichneten Querschnitt nach rechts abfallend und wird rechts neben der Vorrichtung 2 durch einen Auswurftisch 40 fortgesetzt.

In Fig. 2 erkennt man, daß dort, wo das angehobene Tragelement 20 den Boden 14 durchsetzt, der Boden 14 mittig einen Längsschlitz 42 besitzt, der auf jeder Seite durch eine Begrenzung in Form einer vertikalen Platte 44 begrenzt ist. Die Platten 44 erstrecken sich ein Stück oberhalb des Bodens 14 und ein kleineres Stück unterhalb des Bodens 14. Die Höhenabmessung oberhalb des Bodens 14 ist so gewählt, daß bei zwischen die Platten 44 abgesenktem Tragelement 20 (mit unterbrochenen Linien in Fig. 2 angedeutet) die in den Zugangsweg 6 hineinlaufenden Schlachttiere gezwungen sind, ihre Füße rechts und links des Schlitzes 42 und des Plattenpaars 44 zu setzen. Die Platten 44 stellen innenseitig eine in beiden Seitenrichtungen wirksame Abstützung des Tragelements besonders in dessen angehobener Position gemäß Fig. 2, wenn das Tragelement 20 ein Schlachttier trägt, dar. Zur Reibungsverminderung sowohl beim Anheben/Absenken des Tragelements 20 als auch beim Längsverfahren des Transportwagens 8 können die Platten 44 auf der Schlitzseite längs verlaufende Gleitleisten aus Kunststoff oder alternativ kleine Rollen mit vertikaler Drehachse aufweisen. In der Falle 4 bestehen die Platten 44 nur noch aus den unterhalb des Bodens 16 befindlichen Bereichen, damit bei vollständig abgesenktem Tragelement 20 das betäubte Schlachttier ohne irgendein Hindernis im Bodenbereich zur Seite hin abrollen und auf der Seite rutschend auf den Auswurftisch 40 gelangen kann.

Es versteht sich, daß die Seitenwände 36, 38 so hoch sind, daß sie die Schlachttiere auch im durch das Tragelement 20 vollständig angehobenen Zustand seitlich halten. Die Seitenwände 36, 38 können bevorzugt aus einem glatten, reibungsarmen Material, wie Kunststoff, bestehen oder innenseitig damit belegt sein.

In Fig. 4 ist eine alternative Ausführungsform der seitlichen Begrenzungen des Längsschlitzes 42 gezeigt. Von den Platten 44 sind nur noch die unterhalb des Bodens 14 bzw. 16 befindlichen Bereiche übrig geblieben, welche die beschriebene Abstützfunktion für das Tragelement 20 ausüben. Oberhalb des Bodens 14 gibt es zwei, jeweils um eine untere Längsachse schwenkbare, streifenförmige Platten 45, die im gezeichneten, aufeinander zu geschwenkten Zustand oben miteinander in Berührung sind und so gemeinsam eine Abdeckung für den Schlitz 42 bilden. Wenn das Tragelement 20 von unten kommend angehoben wird, drückt es die Platten 46 z. B. gegen Federkraft auseinander. Im "geschlossenen" Zustand bilden die Platten 46 wiederum ein mittiges, längs verlaufendes Betretungshindernis für die Schlachttiere.

Bei der Ausführungsform gemäß Fig. 2 und Fig. 3 könnte der Schlitz 42 bzw. der Abstandsraum zwischen den Platten 44 beispielsweise durch einen Kunststoffstreifen oder durch ein Kunststoffstreifenpaar oben abgedeckt sein, der bzw. das durch das nach oben gehende Tragelement 20 unter elastischer Umbiegung seitlich aufgedrückt wird.

In Fig. 1 sieht man, daß der Zugangsweg 6 und die Falle 4 durch eine Schiebetür 48, die durch Vertikalverschiebung öffenbar und schließbar ist, voneinander getrennt sind. Wenn ein auf dem Tragelement 20 des Transportwagens 8 aufliegendes Schlachttier in die Falle 4 eingebracht werden soll, wird die Schiebetür 48 nach oben geöffnet. Hinter diesem Schlachttier wird die Schiebetür 48 nach unten geschlossen.

Einen analoge Schiebetür 50 befindet sich am Eingangsende des Zugangsweges 6. Nach dem Abtransport des zuvor vordersten Schlachttiers im Zugangsweg 6 in die Falle 4 wird die Schiebetür 50 geöffnet, damit ein weiteres Schlachttier in den Zugangsweg 6 hineinlaufen kann. während die von vorher noch im Zugangsweg 6 befindlichen Schlachttiere in dem Zugangsweg weiter nach vorne laufen.

Die in Fig. 1 rechte Vorderseite der Falle 4 ist durch ein Gitter 52 abgeschlossen.

Es versteht sich, daß der Raum 10 unterhalb des Bodens 14 bzw. 16 genügend hoch ist, daß der Transportwagen 8 einschließlich ganz nach unten abgesenktem Tragelement 20 der Höhe nach darin Platz findet. Der Raum 10 kann nach vorn, hinten, und beiden Seiten abgeschlossen sein, könnte aber auch teilweise offen sein.

Das Tragelement 20 hat vorzugsweise mindestens an seiner Oberseite 34 und den im angehobenen Zustand gemäß Fig. 2 anschließenden Seitenbereichen bis hinunter zu den Platten 44 eine Oberfläche aus Kunststoff. In die Oberseite 34 eingelassen, aber etwas über die Kunststoffoberfläche vorstehend befinden sich zwei Elektroden 14, die - wie in Fig. 5 und Fig. 6 gezeichnet - entweder einen Abstand in Querrichtung des Zugangswegs 6 (Fig. 5) oder einen Abstand in Längsrichtung des Zugangswegs 6 (Fig. 6) haben. Auch Übergangsformen zwischen diesen beiden Geometrien, d. h. schräge Hintereinanderanordnung, sind möglich. Die beiden Elektroden 54 in Fig. 6 liegen mehr auf der linken Seite der Oberseite 34 des Tragelements 20 und an einer derartigen Längsstelle des Tragelements 20, daß die Elektroden 54 für Herzbetäubung geeignet sind. Bei der Ausführung gemäß Fig. 5 liegen die beiden Elektroden 54 an einer derartigen Längsstelle der Oberseite 34 des Tragelements 20, daß die Elektroden 54 für Herzbetäubung geeignet sind.

Die Kunststoffoberfläche des Tragelements 20 sollte nicht zu glatt sein oder sogar Querrillen haben, um eine rutschfreie Mitnahme des betreffenden Schlachttiers sicherzustellen. Alternativ oder zusätzlich kann man im hinteren Bereich des Tragelements einen von der Obeseite nach oben ragenden Höcker vorsehen, um eine sichere Mitnahme des betreffenden Schlachttiers nach vorn zu bewirken.

In Fig. 1 erkennt man auch ein Elektrodenpaar 56 zum Ansetzen im Kopfbereich des zu betäubenden Schlachttiers. Das Elektrodenpaar 56 hängt an einem Federzug 58 und kann von einer Bedienungsperson mit geringem Kraftaufwand nach unten zum Ansetzen am Schlachttierkopf bewegt werden und nach der so durchgeführten Hirnbetäubung nach oben abgehoben werden.

Ein typischer Arbeitsablauf der Vorrichtung 2 ist wie folgt:

Durch vollständiges Anheben des Tragelements 20 wird das vorderste Schlachttier im Zugangsweg 6 mit seinen Füßen vom Boden 14 abgehoben und in diesem abgehobenen Zustand bei geöffneter Schiebetür 48 durch Verfahren des Transportwagens 8 nach vorne in die Falle 4 gebracht. Nachdem die Schiebetür 48 geschlossen worden ist, erfolgt zunächst eine Hirnbetäubung mittels des Elektrodenpaars 56 und anschließend eine Herzbetäubung mit den zwei Elektroden 54. Danach wird das Tragelement 20 so weit abgesenkt, daß sich seine Oberseite 34 im wesentlichen auf gleicher Höhe mit dem Boden 16 der Falle 4 befindet. Die Seitenwand 38 der Falle 4 wird geöffnet, und das betäubte Schlachttier kommt seitlich rutschend aus der Falle 4 heraus. Der Transportwagen 8 fährt mit abgesenktern Tragelement 20 zurück in seine Ausgangsposition. Ein neuer Arbeitszyklus beginnt.

Der Boden 14 bzw. 16 des Zugangswegs 6 und der Falle 4 kann in Richtung des Pfeils 12 leicht ansteigend verlaufen, z.B. wenn der resultierende Höhengewinn von Vorteil ist.

Als Beispiel für das mögliche Anheben praktisch des gesamten Transportwagens wird die Möglichkeit genannt, die Achsen der Rollen 22 exzentrisch in drehbaren Büchsen zu lagern. Durch Drehen der Büchsen lassen sich die Rollenachsen relativ zu der restlichen Basis nach unten ausfahren oder nach oben einziehen.

## Patentansprüche

1. Vorrichtung zum elektrischen Betäuben von Schlachttieren, insbesondere Schweinen, aufweisend
(a) eine Betäubungsfalle, in der jeweils ein immobilisiertes Schlachttier elektrisch betäubt werden kann;
(b) und einen Zugangsweg für die Schlachttiere zu der Betäubungsfalle, der einen Boden aufweist,
**gekennzeichnet durch**
(c) einen Transportwagen, der auf niedriger als der Boden des Zugangswegs liegendem Niveau abgestützt ist und längs des Zugangswegs und bis in die Betäubungsfalle hin und her bewegbar ist;
(d) einen Längsschlitz im Boden des Zugangswegs;
(e) und ein Tragelement als Bestandteil des Transportwagens, das - den Längsschlitz passierend - relativ zu dem restlichen Transportwagen oder mitsamt dem Transportwagen so weit anhebbar ist, daß es an der Bauchseite eines Schlachttiers angreifend das Schlachttier von dem Boden weg abhebt, und so weit absenkbar ist, daß ein Hineinlaufen von Schlachttieren in den Zugangsweg möglich ist.

2. Vorrichtung nach Anspruch 1,
**gekennzeichnet durch**
einen Antrieb für die Längsbewegungen des Transportwagens.

3. Vorrichtung nach Anspruch 1 oder 2,
**gekennzeichnet durch**
einen Antrieb für das Anheben des Tragelements.

4. Vorrichtrung nach mindestens einem der Ansprüche 1 bis 3,
**dadurch gekennzeichnet,**
daß auf dem Boden des Zugangswegs im wesentlichen mittig ein längsverlaufendes, erhöhtes Betretungshindernis für die Schlachttiere vorgesehen ist.

5. Vorrichtung nach mindestens einem der Ansprüche 1 bis 4,
**dadurch gekennzeichnet,**
daß dem Längsschlitz eine Abdeckung zugeordnet ist, die durch das Anheben des Tragelements geöffnet wird.

6. Vorrichtung nach mindestens einem der Ansprüche 1 bis 5,
**dadurch gekennzeichnet,**
daß sich das Tragelement, mindestens im angehobenen Zustand, an den seitlichen Begrenzungen des Längsschlitzes relativbewegbar abstützt.

7. Vorrichtung nach mindestens einem der Ansprüche 1 bis 6,
**dadurch gekennzeichnet,**
daß das Tragelement in seinem oberen Bereich im wesentlichen vertikal-plattenartig oder längsbalkenartig ausgebildet ist.

8. Vorrichtung nach mindestens einem der Ansprüche 1 bis 7,
**dadurch gekennzeichnet,**
daß das Tragelement in seinem oberen Bereich mit einer oder zwei Elektroden versehen ist, um Strom für eine Herzbetäubung durch das betreffende Schlachttier zu leiten.

9. Vorrichtung nach Anspruch 8,
**dadurch gekennzeichnet,**
daß zwei Elektroden in Längsrichtung des Zugangswegs beabstandet oder zwei Elektroden in Querrichtung des Zugangswegs beabstandet vorgesehen sind.

10. Vorrichtung nach mindestens einem der Ansprüche 1 bis 9,
**dadurch gekennzeichnet,**
daß der Betäubungsfalle ein Elektrodenpaar zum Ansetzen im Kopfbereich des betreffenden Schlachttiers zugeordnet ist, um mindestens Strom für eine Hirnbetäubung durch das betreffende Schlachttier zu leiten.

11. Vorrichtung nach mindestens einem der Ansprüche 1 bis 10,
**gekennzeichnet durch**
eine Steuerung für den teilweise-selbsttätigen oder den vollständig-selbsttätigen Ablauf der folgenden Vorgänge:
- Positionieren des Transportwagens unter einem Schlachttier;
- Anheben des Tragelements;
- und Vorfahren des Transportwagens in die Betäubungsfalle.

12. Vorrichtung nach mindestens einem der Ansprüche 1 bis 11,
**gekennzeichnet durch**
eine Steuerung für den teilweise-selbsttätigen oder den vollständig-selbsttätigen Ablauf der Betäubungsvorgänge, nachdem das betreffende Schlachttier in der Betäubungsfalle positioniert ist, vorzugsweise für eine Abfolge von Hirnbetäubung zuerst und Herzbetäubung danach.
